# EUROPEAN PATENT APPLICATION

(11) **EP 1 217 788 A1**
(43) Date of publication of application: **26.06.2002**
(21) Application number: 99943339.4
(22) Date of filing: 14.09.1999
(51) Int. Cl.: H04L 12/28, H04J 3/00

(54) **ARTIFICIAL LINE EXCHANGING SYSTEM AND ARTIFICIAL LINE EXCHANGING METHOD, AND SENDER- AND RECEIVER-SIDE TRANSMITTERS FOR ARTIFICIAL LINE EXCHANGING SYSTEM**

(71) Applicant: FUJITSU LIMITED, Kawasaki-shi, Kanagawa 211-8588 (JP)
(72) Inventor: YASUE, Kazuhito Fujitsu Limited, Kawasaki-shi, Kanagawa 211-8588 (JP); NAKAYAMA, Mikio Fujitsu Limited, Kawasaki-shi, Kanagawa 211-8588 (JP); UCHIDA, Yoshihiro Fujitsu Limited, Kawasaki-shi, Kanagawa 211-8588 (JP); AIHARA, Naoki Fujitsu Limited, Kawasaki-shi, Kanagawa 211-8588 (JP); KAMOI, Jyoei Fujitsu Limited, Kawasaki-shi, Kanagawa 211-8588 (JP)
(74) Representative: HOFFMANN - EITLE
(86) International application number: JP9905017
(87) International publication number: WO0120852

(57) **Abstract**

A SOH (101) of a transmission frame of SDH (SONET) is terminated at a sender-side transmitter (3 or 4) and is added to remaining data at a receiver-side transmitter (4 or 3). At the sender-side transmitter (3 or 4), the remaining data (102, 103), including an administrative unit pointer (102) is converted into ATM cells and the ATM cells are sent out to an ATM network (2). After that, at the receiver-side transmitter (4 or 3), the remaining data is restored from the received ATM cells. As a result, operation, administration, and maintenance are independently performed over sections disposed at the input and the output sides of the ATM network (2). Further, processes (conversion to ATM cells, restoring SDH frames) are performed irrespective of the difference between the administrative pointer (102) and a payload (103), and the number of the signal paths (104) multiplexed in the payload (103).

## Description

### TECHNICAL FIELD

The present invention relates to technique of circuit switching called "circuit emulation," and more specifically, to a system and a method for circuit emulation and a sender- and receiver-side transmitters for the system. In particular, the present invention preferably applied to circuit emulation for transmitting an SDH (Synchronous Digital Hierarchy) /SONET (Synchronous Optical Network) frame, originally designed for a synchronous network, through a network (e.g., an ATM (Asynchronous Transfer Mode) network) other than SDH/SONET.

### BACKGROUND OF THE INVENTION

Here, background technique will now be described referring to the following three topics of: (A) SDH/SONET; (B) ATM adaptation layer; and (C) circuit emulation.

### (A) Description of SDH/SONET:

SDH is a standard of a transmission interface defined by ITU-T (International Telecommunication Union-telecommunication standardization sector), and SONET is a transmission interface developed mainly in United States.

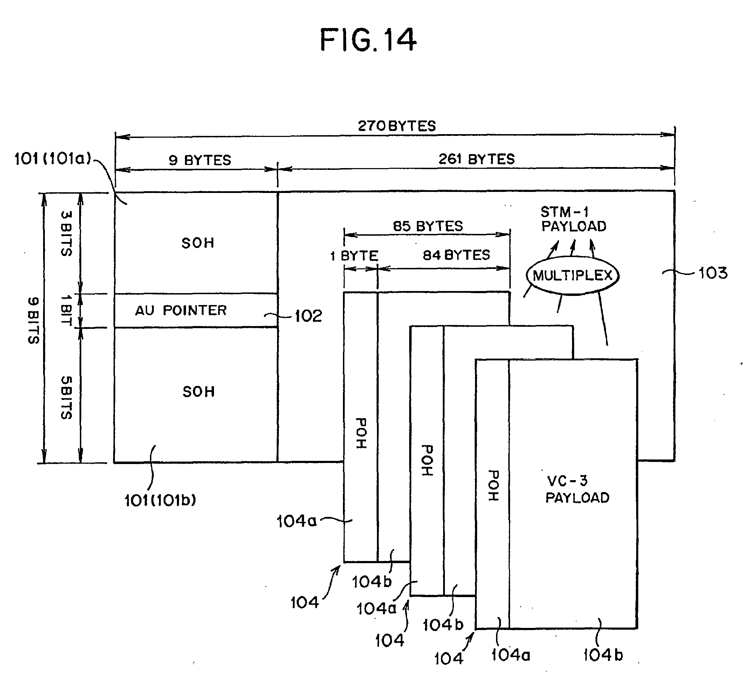

FIG. 14 shows an STM-1 (Synchronous Transport Module level-1) frame having a bit rate of approximately 155 Mbps, the basic frame format of SDH. As shown in FIG. 14, an STM-1 frame is a matrix of 9 lines (bits) of 270 bytes, and have three regions respectively assigned to a SOH (section overhead) 101, an AU (Administrative Unit) pointer 102, and a payload 103.

SOH 101 is divided into a regenerator overhead (RSOH) 101a for a regeneration section, disposed at the upper side of AU pointer 102, and a multiplex SOH (MSOH) 101b for a multiplex section, disposed at the lower side of AU pointer 102.

Here, RSOH 101a has A1 and A2 bytes (fixed values) that are used for framing and synchronization; B1 byte to check a bit error on the regenerator section; E1 byte for orderwire; an F1 byte for user channel; and D1 through D3 bytes dedicated to the data communication channel (DCC) of 192 kbps data link. MSOH 101b has B2 byte to check a bit error on the multiplex section; K1 and K2 bytes called APS (Automatic Protection Switching) to switch systems, and to indicate an alarm state as a problem arises; D4 through D12 bytes for DCC of 576kbps data link. Respective bytes in RSOH 101a and MSOH 101b are information required for operation, administration, and maintenance (OAM).

In SDH, a terminal equipment or a regenerator replaces (terminates and then regenerates) SOH 101, and at the same time transmits data (frame) so that OAM is performed independently on the regenerator section and the multiplex section thereby guaranteeing highly reliable transmission performed by each section. Generally, aregeneratorreplaces only RSOH 101a, and a terminal equipment replaces both RSOH 101a and MSOH 101b.

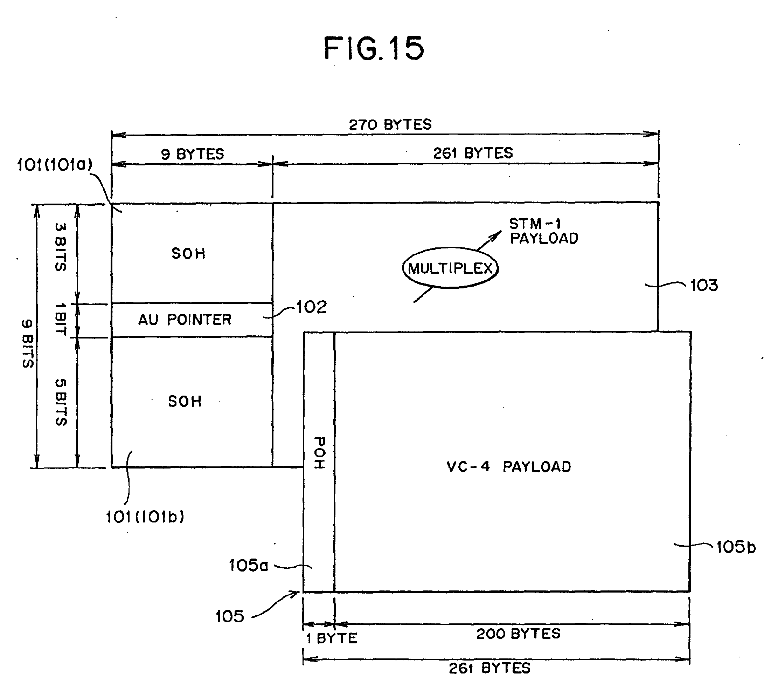

As shown in FIG. 14, three VC (Virtual Container)-3 frames 104, each containing a matrix of 9 lines of 85 bytes, are multiplexed as path signals in payload 103 of an STM-1 frame. Alternatively, a VC-4 frame 105 containing a matrix of 9 lines of 261 bytes is byte-multiplexed in payload 103, as shown in FIG. 15.

Each VC-3 frame 104 of FIG. 14 is a combination of a POH (Path Overhead) 104a of 9 lines of 1 byte and a payload (a VC-3 payload) 104b of 9 lines of 84 bytes, similar configuration to that of an STM-1 frame. Likewise, VC-4 frame 105 is a combination of a POH 105a of 9 lines of 1 byte and a payload (VC-4 payload) 105b of 9 lines of 260 bytes.

Since the phase of the STM-1 frame does not always synchronized with those of each of VC-frames 104 (105), the position on which each VC-frame 104 (105) is multiplexed in the STM-1 frame is not identified (in other words, the position depends on the timing of each VC frame 104 at the time when beingmultiplexed). In order to identify positions where each of VC frames 104 (105) are multiplexed with respect to technique of SDH, AU pointer 102 (H1 and H2 bytes) indicates the positions where each VC frames 104 (105) (the first byte (J1 byte) of each POH 104a (105a)) are multiplexed.

Therefore, it is possible for a receiver side of an STM-1 frame to demultiplex VC frames (path signals) 104 (105) which are multiplexed into the STM-1 frame based on the information included in AU pointer 102. A transmitter sends 8000 STM-1 frames, having the above-mentioned configuration, per second whereupon the transmission rate thereof is 155Mbps (approximately equal to 270 bytes X 8 bits X 9 X 8000).

In SDH, an STM-N (N=4, 16, 64...) frame is generated by byte-multiplexing N STM-1 frames. In the meanwhile, SONET defines an STS-1 (Synchronous Transport Signal level 1) frame of approximately 51Mbps as the basic format. An STS-3 frame that are generated by multiplexing three STS-1 frames is identical in configuration with the above-mentioned STM-1 frame, and further an STS-M (M=3XN) identical in configuration with an STM-N frame is generated by byte-multiplexing N STS-3 frames. Namely, although an STM-N frame of SDH is different in the number of frames multiplexed into the basic format from an STS-M frame of SONET, an STM-N frame is identical in configuration with an STS-M frames (in other words, SONET conforms to (is included in) SDH).

SONET defines RSOH 101a as SOH and MSOH 101b as a line overhead (LOH). An STS-Mrepresents an electrical signal, and an optical signal in SONET is called OC (optical carrier)-M. Here, since an STM-N frame, an STS-M frame, and an OC-M frame are identical in configuration, an optical signal of an STM-N frame or an STS-M frame may be called an OC-M frame in the both case of SDH and SONET.

### (B) Description of ATM adaptation layer:

Services provided on ATM are classified into four kinds (service classes A through D) based on characteristics of media, which classes have respective different requirements for communication, such as real-time transmission, controlling a bit error. However, fixed-sized information units called ATM cells are sent through an ATM network without regarding such service classes. As a solution, a function called ATM adaptation layer (AAL) is used to absorb the differences among the four service classes.

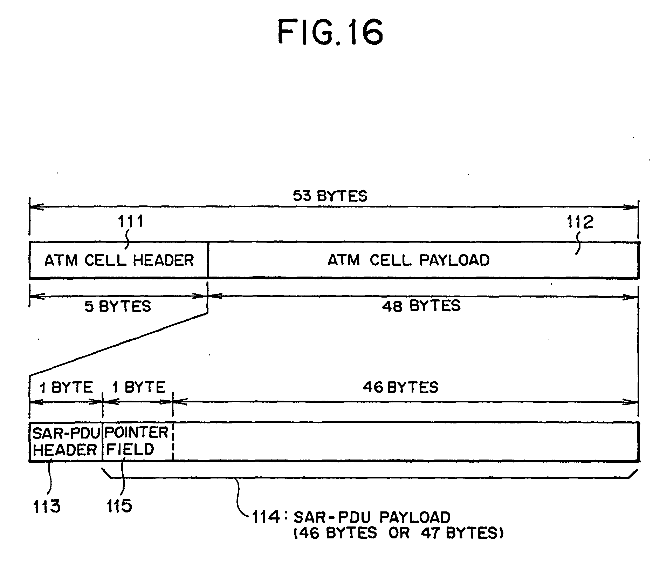

AAL is categorized into four types in accordance with the four service classes. In the four types, AAL type 1 (hereinafter simply called "AAL1") supports service class A (voice and video data of a fixed data rate). FIG. 16 shows a cell format of AAL1. An AAL1 cell (hereinafter also simply called a "cell") is composed of an ATM cell header 111 of 5 bytes and an ATM cell payload 112 of 48 bytes.

The first byte of ATM cell payload 112 is a region called SAR-PDU (Segmentation And Reassembly sublayer-Protocol Data Unit) header 113 in which a sequence number (hereinafter called "SN") of one of 0 through 7 for a single cycle is written so that a sequence number therein is used to control a cell loss and a cell misinsertion. The subsequent 47 bytes is a region called SAR-PDU payload 114 that stores user data, such as a voice and video data, to be sent into the ATM network.

Among eight sequence cells for a single cycle, each cell having a SN of one of 0 through 7, an arbitrary cell having an even SN (i.e., SN=0, 2, 4, or 6) can contain a pointer field 115 at the first byte in SAR-PDU payload 114. If SAR-PDU payload 114 has a boundary (here, data having a boundary is called "structured data"), pointer field 115 indicates the boundary of data in SAR-PDU payload 114. Writing of an offset value (an SDT (Structured Data Transfer) pointer value) into pointer field 115 indicates a single particular byte in SAR-PDU payload 114 which includes the pointer field 115 or in SAR-PDU payload 114 of the succeeding cell.

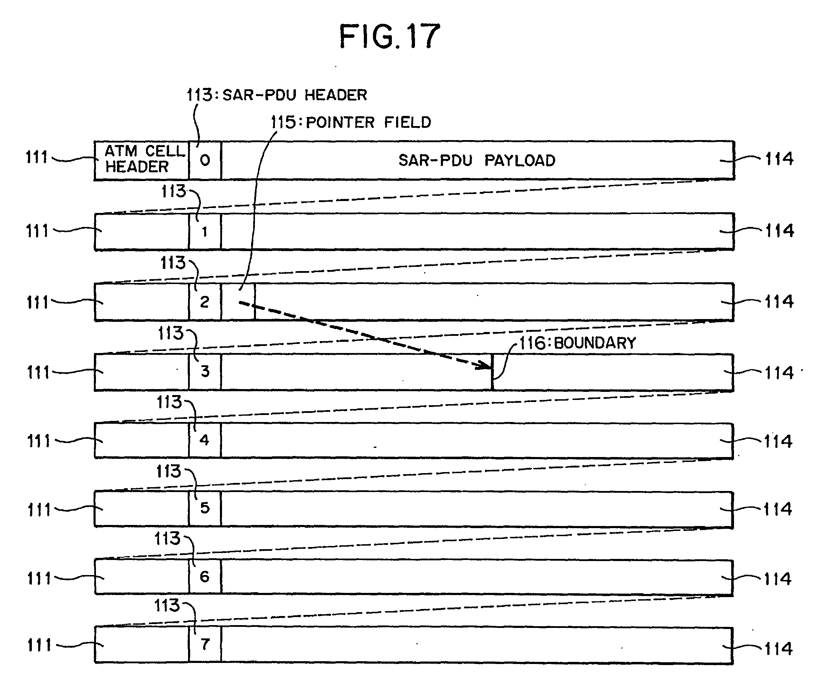

When SAR-PDU payload 114 of SN=3 has boundary 116 as shown in FIG. 17, the position of boundary 116 is indicated by writing the number of data bytes that present between a pointer field 115 of a cell of SN=2 and the boundary in cell of SN=3, as the offset value, into the pointer field 115 of the cell of SN=2.

Generally, the lower 7 bits of the pointer field 115 (1 byte) is used as an SDT pointer value, and the most significant bit (MSB) remaining is used as a check bit for an error, such as for parity check.

### (C) Description of circuit emulation:

Circuit emulation means to emulate circuit switching using, for example, the above-mentioned AAL1.

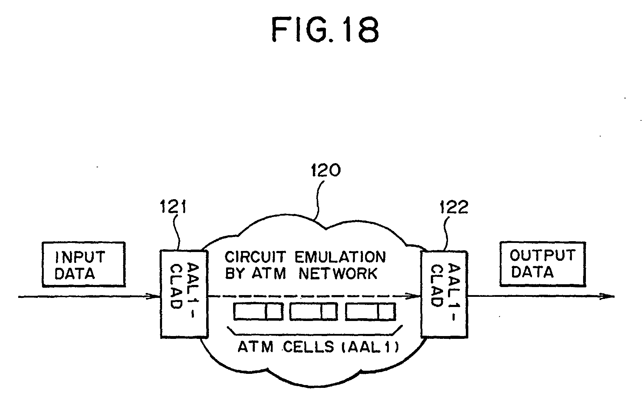

As shown in FIG. 18, AAL1-CLAD section 121 installed at an input side of ATM network 120 converts input data into ATM cells, and the ATM cells in the form of AAL1 cells are switched in ATM network 120. After that, AAL1-CLAD section 122 installed at an output side of ATM network 120 restores the original input data that is to be output from the AAL1 cells. At that time, apparent circuit switching is carried out by setting the bit rate of the output data identical with that of the input data.

Recently, people desire to apply the technique of circuit emulation to transmission frames of SDH (SONET) so that transmission frames of SDH (SONET) are sent through ATM network 120. As a result, it may be possible, in accordance with development and spread of ATM, to integrate various media by sending and receiving data being used in the various media on ATM.

To realize circuit emulation of SDH (SONET) frames, it is suggested that an input SDH (SONET) frame is converted into ATM cells of AAL1, as the simplest mode of circuit emulation. In this mode, input of an SDH (SONET) frame has to be confirmed, however the input frame is not terminated and is overall converted into ATM cells. As an advantage, it is possible to simplify the process and to realize circuit emulation with ease.

At the same time, converting the whole frame into ATM cells requires a large bandwidth of a connection, and it is impossible to independently perform operation, administration, and maintenance of sections disposed at the input and the output sides of ATM network 120 because SOH 101 of the input frame is not terminated.

For this reason, there is a need for a circuit emulation system that independently realizes operation, administration, and maintenance with respect to each sections disposed at the input and the output sides of ATM network 120. An example of such circuit emulation is suggested by Japanese Patent Laid-open (Kokai) Publication No. HEI 4-138744 (hereinafter called "the prior technique").

In the prior technique, the sender side terminates SOH 101 of an input SDH (SONET) frame and then identifies the positions of each path signals (VC frames) 104 (105) which are multiplexed into the payload 103 of the input SDH (SONET) frame based on information in AU pointer 102 (H1 and H2 bytes). Each path signal (POH 106 and payload 107) 104 (105) is converted into ATM cells, which are sent out to ATM network 120. At that time, ATM cells corresponding to data at the first and the last bytes of each VC frame 104 (105) are provided with information (SNs) to identify the first and the last bytes.

Conversely, the receiver side detects the first and the last bytes of each VC frame 104 (105), which has been converted into the ATM cells, based on the SNs thereby restoring each VC frame 104 (105) with reference to the ATM cells which the receiver side receives during the time period when receiving an ATM cell corresponding to the first byte and the ATM cell corresponding to the last byte. After that, the receiver side regenerates an SDH (SONET) frame with a new SOH 101 regenerated and then added thereto.

As mentioned above, since the prior technique discloses termination and regeneration of SOH 101, it is possible to independently perform operation, administration, and maintenance of respective sections at the input and the output sides of ATM network 120. Further, a bandwidth of connection can be smaller because SOH 101 and AU pointer 102 are not transferred to the receiver side (are not converted into ATM cells).

However, since the number of VC frames (path signals) 104 (105) multiplexed in payload 103 of an SDH (SONET) frame is not fixed as described above, the prior technique requires means for supporting the conversion of VC frames 104 (105) to ATM cells, each means being dedicated to the respective different number of VC frames multiplexed.

Namely, since the size of VC frames and the number of VC frames when three path signals of VC-3 frames 104 are multiplexed into an STM-1 frame (see FIG. 14) are different from those when a path signal of VC-4 frame 105 is byte-multiplexed into an STM-1 frame (see FIG. 15). the sender side converts data in the respective STM-1 frame into ATM cells regarding difference in size and in the number of VC frames. Also the receiver side restores STM-1 frames with regarding the difference in size and in the number of VC frames 104 (105).

As a result, when an upper frame having a large bit rate, such as an STM-4/16/64 frame (an STS-12/48/192), is input, the number of signal paths multiplexed may be further increased. Whereupon the prior technique may be at a considerable disadvantage due to its circuit emulation depending on the number of signal paths that are to be multiplexed.

The foregoing problems in view, it is an object of the present invention to provide a circuit emulation system, a circuit emulation method, and sender- and receiver-side transmitters for the system that independently realizes operation, administration and maintenance for the sender side and the receiver side for circuit emulation irrespective of the number of signal paths multiplexed into an SDH (SONET) frame.

### DISCLOSURE OF THE INVENTION

To attain above-mentioned object, there is provided a circuit emulation system comprising: a sender-side transmitter, disposed at the input side of an ATM network, for receiving a synchronous-network-standards frame in conformity with synchronous network standards, such as SDH, which frame has three regions respectively assigned to a section overhead (hereinafter called an "SOH"), an administrative unit pointer, and a payload; and a receiver-side transmitter, disposed at the output side of the ATM network, for outputting the synchronous-network-standards frame. Each of the sender-and receiver-side transmitters comprises functional units as follows.
(1) The sender-side transmitter comprises:
   (a) a SOH terminator for terminating the SOH of the received synchronous-network-standards frame; and
   (b) means for converting data in all of the three regions of the received synchronous-network-standards frame except the SOH, which regions include the administrative unit pointer, into ATM cells as object data for circuit emulation by ATM and sending the ATM cells out to the ATM network.
(2) The receiver-side transmitter comprises:
   (a) an ATM-cell receiver for receiving the ATM cells from the ATM network and extracting the object data for circuit emulation from the received ATM cells; and
   (b) a synchronous-network-standards-frame regenerator for restoring the data in the remaining regions of the received synchronous-network-standards frame from the object data for circuit emulation, which object data has been extracted by the ATM-cell receiver, and regenerating an output synchronous-network-standards frame with a new SOH added thereto.

In the circuit emulation system having the above-mentioned elements, at the sender-side transmitter, a SOH of a synchronous-network-standards frame, which has three regions respectively assigned to the SOH, an administrative unit pointer, and a payload, is terminated (SOH terminating step) whereupon data of the three region except the SOH, which regions include the administrative unit pointer, is converted into ATM cells and the ATM cells are sent out to an ATM network (ATM cell generating step; data converting step). Since data of an administrative unit pointer is also converted into ATM cells, data of three regions of an input synchronous-network-standards frame except a SOH is converted into ATM cells without regarding a difference in kind of information between the administrative unit pointer and a payload, and the number of signal paths multiplexed in the payload that is confirmed based on information stored in the administrative unit pointer.

Meanwhile, at the receiver-side transmitter, the ATM cells are received from the ATM network and the object data for circuit emulation is extracted from the received ATM cells are received (ATM cell receiving step), and the data in the remaining regions of the synchronous-network-standards frame is restored from the object data for circuit emulation, which object data has been extracted in the ATM-cell receiving step, and the output synchronous-network-standards frame is regenerated with a new SOH added thereto (output synchronous-network-standards frame regenerating step).

Therefore, in the circuit emulation system of the present invention, an SOHof a synchronous-network-standards frame is terminated at the sender-side transmitter and added to the restored data at the receiver-side transmitter, and, at the seder-side transmitter, data in the remaining regions of the synchronous-network-standards frame, which regions includes the administrative unit pointer is converted into ATM cells and the ATM cells are sent out to the ATM network. After that, the receiver-side transmitter, which receives the sent ATM cells, regenerates the synchronous-network-standards frame. It is possible to carry out operation, administration, and maintenance with respect to each section on the opposite side of the ATM network and to execute processes (for ATM cell generating and data restoring) irrespective of difference between the administrative pointer and the payload, and the number of signal paths multiplexed in the payload.

As a result, the circuit emulation system (the sender-and the receiver-side transmitters) of the present invention is allowed to be simple in configuration required, thereby reducing the size, a cost, and energy consumption.

The data-converting means in the sender-side transmitter may include a particular position information adding section for adding, to the ATM cells, particular position information for indicating particular data in the object data for circuit emulation, which particular data is located at a particular position of the input synchronous-network-standards frame. In this case, the ATM-cell receiver may preferably include a particular position information extracting section for extracting the particular position information from the received ATM cells and the synchronous-network-standards-frame regenerator may preferably restore the data in the remaining regions of the synchronous-network-standard frame and adds the new SOH in such a manner that the particular data, which is indicated by the particular position information extracted by the particular position information extracting section, is located at the same position in the output synchronous-network-standards frame as the particular position in the input synchronous-network-standards frame.

With such ATM-cell receiver, it is possible to identify the position where an ATM cell indicated by the particular position information (the object data for circuit emulation) has been located in the input synchronous-network-standards frame (the remaining region) with ease based on the particular position information. Therefore information of the remaining region can be surely restored.

Here, when the particular position information is given to the boundary indicating pointer field of structured data, which is defined as ATM cells that support ATM adaptation layer type 1, above-mentioned circuit emulation can be realized by using the existing format of AAL1 cell. Asaresult, circuit emulation can be realized in an actual network with ease.

Further, if the particular position is a leading position of the payload of the input synchronous-network-standards frame, the receiver-side transmitter restores data in the remaining region simply by sequentially outputting data, which has been extracted from ATM cells received after receiving the ATM cells indicated by the particular position information whereupon the higher-speed restoring of the remaining region is carried out with ease.

The circuit emulation can be used in other communication network except an SDH network. At that time, the sender-side transmitter converts data in all of the three regions of the synchronous-network-standards frame except the SOH, which regions include the administrative unit pointer, into a signal format supported by the such communication network, and send the converted signals out to the communication network. At the receiver-side transmitter, the data in the remaining region is restored thereby performing circuit emulation.

### BRIEF DESCRIPTION OF THE DRAWINGS

FIG. 1 is a block diagram schematically showing an SDH /SONET circuit emulation system according to a first embodiment of the present invention.
FIG. 2 is a diagram showing a configuration of an STM-1 frame.
FIG. 3 is a block diagram schematically showing the main part of circuit emulation transmitters shown in FIG. 1.
FIG. 4 is a block diagram schematically showing the main part of a PHY unit (an SOH processor) of the circuit emulation transmitters of FIG. 3.
FIG. 5 is a block diagram schematically showing the main part of a cell assembler/deassembler (AAL1-CLAD) of the SDH/SONET circuit emulation transmitters of FIG. 3.
FIG. 6 is a block diagram schematically showing the main part of a cell assembler of FIG. 5.
FIG. 7 is a block diagram schematically showing the main part of a cell deassembler of FIG. 5.
FIG. 8 is an operational view showing a SOH terminating operation performed in a sender-side transmitter in the SDH/SONET circuit emulation system of FIG. 1.
FIG. 9 is an operational view showing an cell generating operation performed in the sender-side transmitter in the SDH/SONET circuit emulation system of FIG. 1.
FIG. 10 is a flow diagram illustrating an SDT pointer value generating operation performed by the cell assembler of FIG. 6.
FIG. 11 is an operational view showing an cell deassembling operation performed in a receiver-side transmitter of the circuit emulation system of FIG. 1.
FIG. 12 is an operational view showing an SOH generating operation performed in the receiver-side transmitter of the circuit emulation system of FIG. 1.
FIG. 13 is a block diagram schematically showing an SDH/SONET circuit emulation system according to another embodiment of the present invention.
FIG. 14 is a diagram showing a configuration of an STM-1 frame (the number of paths multiplexed is three).
FIG. 15 is a diagram showing a configuration of an STM-1 frame (the number of paths multiplexed is one).
FIG. 16 is a diagram showing a format of an ATM cell (an AAL1 cell).
FIG. 17 is a diagram showing a boundary of structured data, which boundary is indicated by an SDT pointer in an AAL1 cell.
FIG. 18 is a diagram illustrating circuit emulation performed by ATM.

### BEST MODE FOR CARRYING OUT THE INVENTION

### (A) DESCRIPTION OF FIRST EMBODIMENT:

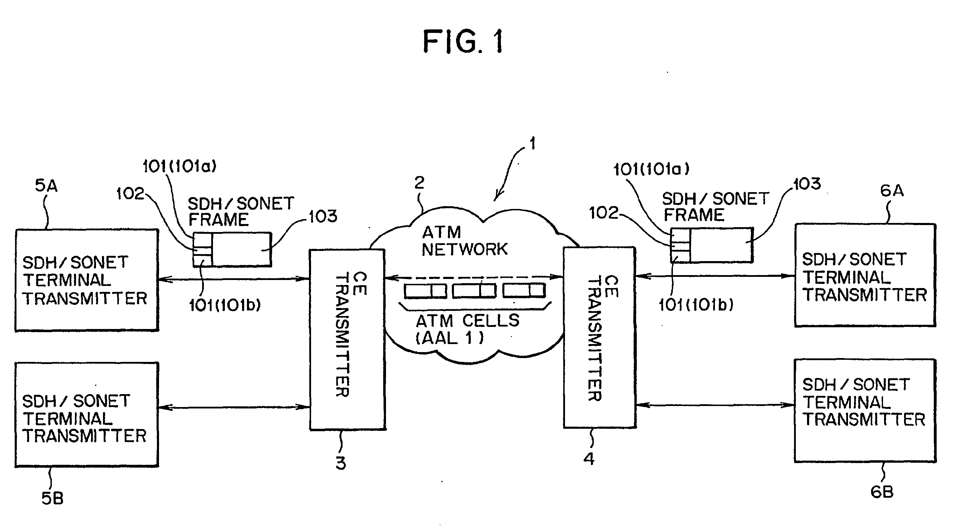

FIG. 1 is a block diagram schematically showing an SDH /SONET circuit emulation system according to a first embodiment of the present invention. SDH/SONET circuit emulation system 1 (hereinafter simply called "CES 1") of FIG. 1 is interposed between terminal equipment 5A (5B) and terminal equipment 6A (6B). CES 1 comprises circuit emulation (CE) transmitters 3 and 4 respectively at the input side and the output side of an ATM network 2 so that CES 1 sends, via an ATM network 2, an SDH/SONET frame handled by terminal equipment 5A (5B) or terminal equipment 6A (6B) to terminal equipment 6A (6B) or terminal equipment 5A (5B), which is disposed at the other side of ATM network 2.

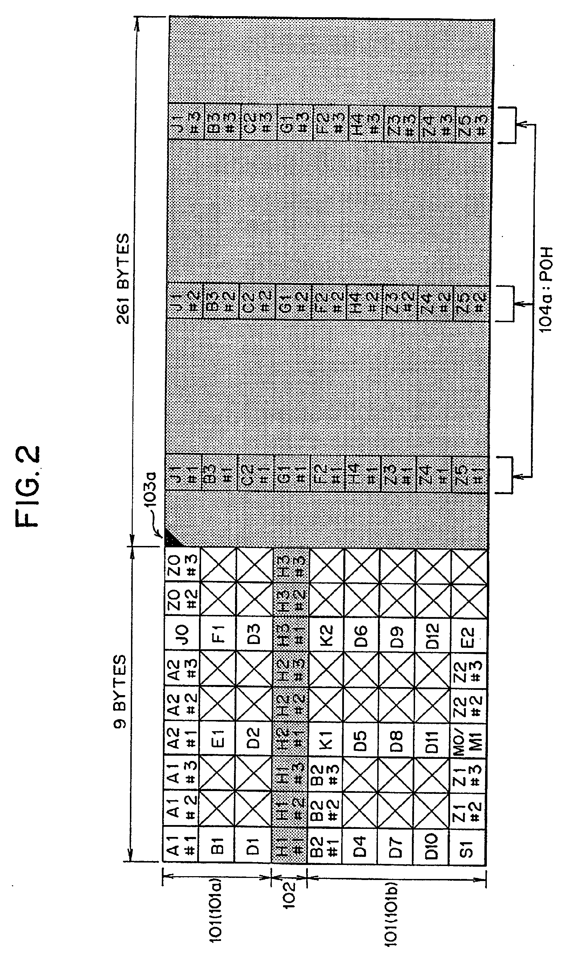

Throughout this specification, when there is no need to discriminate terminal equipment 5A from terminal equipment 5B and terminal equipment 6A from terminal equipment 6B, these terminal equipments are referred as terminal equipment 5 and terminal equipment 6, respectively. These terminal equipments 5 and 6 handle, as the above-described SDH/SONET frame, an STM-1 (STS-3/OC-3) frame of FIG. 2 having a payload 103 in which three VC-3 frames (path signals) 104 denoted by #1 through #3 are multiplexed.

As shown in FIG. 2, each POH 104a of three path #1 through #3 respectively includes a J1 byte, a B3 byte, a C2 byte, a G1 byte, an F2 byte, an H4 byte, and Z3 through Z5 bytes on the recommendation. The positions of each J1 bytes of the three VC-1 frames, which bytes are at the first positions of the each VC-3 frames 104, are respectively indicated by H1 bytes (#1 through #3) and H2 bytes (#1 through #3) in an AU pointer 102. The indication of the leading positions of the multiplexed VC-3 frames 104 is used as demultiplexing the frames. Each byte in POH 104a will be briefly described as follows:
(1) J1 byte: Path trace byte used to verify the connection of a path by continuously sending fixed-pattern signals;
(2) B3 byte: Path parity byte to check a bit error occurred in a path by BIP(Bit-Interleaved Parity)-8;
(3) C2 byte: Path signal label byte to indicate whether or not VC-3 frame 104 is contained in payload 104b (similarly, whether or not VC-4 frame 105 of FIG. 15 is contained in payload 105b);
(4) G1 byte: Path status byte to send the sender side of VC-3 frames 104 (or VC-4 frame 105) the result of the check for a bit error in a path (FEBE: Far End Block Error), and the state of terminating of the path (FERF: Far End Receive Failure);
(5) F2 byte: Path user channel byte that is reserved for needs of network user;
(6) H4 byte: Virtual tributary indicator used to indicate the position of each VC-3 frame 104 (or VC-4 frame 105) in payload 104b (or payload 105b);
(7) Z3 through Z5 bytes: Growth bytes that are reserved for future use.

As known to the art, data bytes in an SDH/SONET frame of FIG. 2 are sequentially sent rightward starting with A1 byte, which locates at the left edge of the first line. Then when the data byte of the right edge of the first line, data bytes of the second line are sent rightward from B1 byte on the left edge and data bytes of the third through the ninth (the last) lines are sent rightwards in the same manner as that of the first line.

CES 1 of FIG. 1 carries out a process that, upon receipt of an SDH/SONET frame (hereinafter simply called a "frame") from terminal equipment 5 (or 6), CE transmitter 3 (or 4) terminates SOH 101 of the frame, converts data in AU pointer 102 and payload 103, which data is except SOH 101, into ATM cells and sends the ATM cells out to the ATM network 2.

In the meanwhile, CE transmitter 4 (or 3) receives the ATM cells from ATM network 2, restores the AU pointer 102 and the payload 103 and further regenerates an output frame, by adding a new SOH 101, to the restored 102 and 103 that is to be sent to terminal equipment 6 (or 5). A series of the process of transmission of an SDH/SONET frame performed by terminal equipments 5 and 6, which are respectively disposed different sides of ATM network 2, realizes circuit emulation by ATM.

In the series of the process of transmission, a frame sent from terminal equipment 5A (6A) is received by terminal equipment 6A (5A), and a frame sent from terminal equipment 5B (6B) is received by terminal equipment 6B (5B). Therefore CE transmitter 3 (4) executes circuit emulation by ATM on frames sent and received by each of terminal equipment 5A and 5B (6A and 6B) therein.

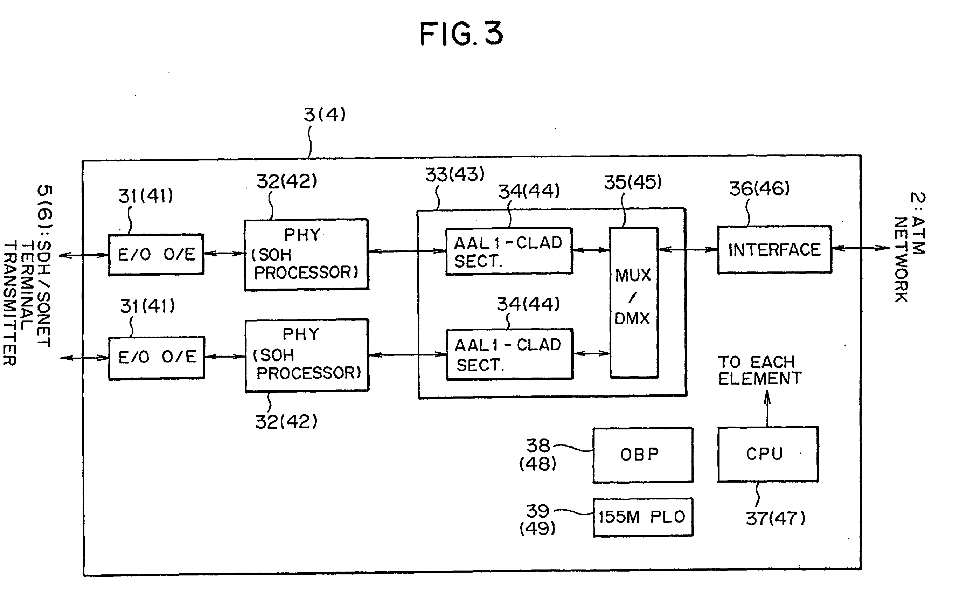

CE transmitter 3 (4) of the present invention comprises, as the main parts thereof, two electrical/optical-optical/electrical converters (E/O-O/E) 31 (41) and two physical layer units (PHYunits; SOH processors) 32 (42), each two of which are respectively prepared for each of two terminal equipments 5A and 5B (6A and 6B), in addition to a cell assemble/deassemble unit 33 (43), an interface 36 (46), a CPU (system CPU) 37 (47), a power source (OBP) 38 (48), and a 155MHz phase locked oscillator (155M PLO) 39 (49), as shown in FIG 3.

E/O-O/E 31 (41) carries out an optical-to-electrical conversion by converting frames in the form of optical signals (OC-3 frames) input from terminal equipment 5 (6) therein to electrical signals (STS-3 frames). At the same time, E/O-O/E 31 (41) carries out an electrical-to-optical conversion by converting STS-3 frames of electrical signals from PHY unit 32 (42) to optical signals of OC-3 frames that is to be output to terminal equipment 5 (6).

PHY unit (SOH processor) 32 (42) performs physical layer functions with respect to input SDH frames. For example, PHY unit 32 (42) performs SOH process by terminating SOH 101 of an SDH frame input from E/O-O/E 31 (41) and generating a new SOH 101 that is to be added to an SDH frame, whose SOH 101 has been terminated, from cell assemble/deassemble unit 33 (43) thereby regenerating an SDH/SONET frame to be output to terminal equipment 5 (6).

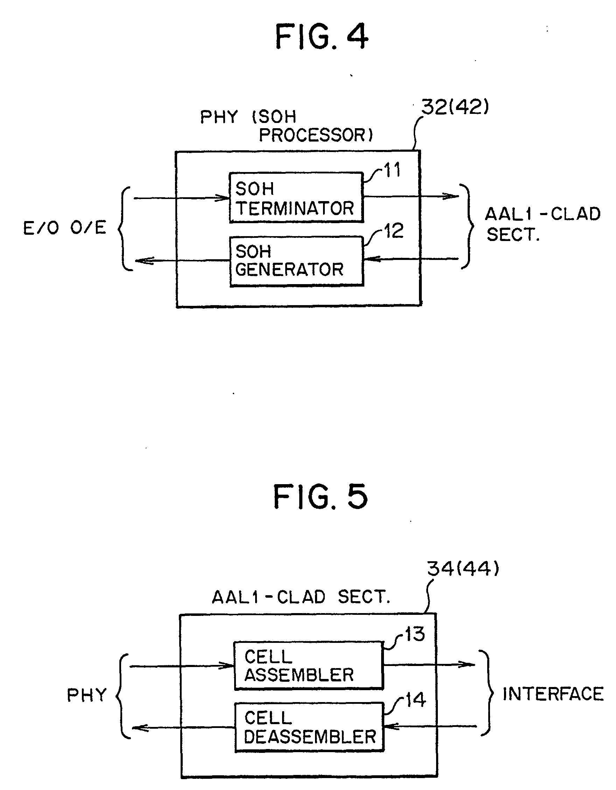

To realize such a SOH process, PHY unit 32 (42) comprises, as the main part, an SOH terminator 11 to terminate SOH 101 of SDH frame input from E/O-O/E 31 (41) and an SOH generator 12 to generate a new SOH 101 to be added to an SDH frame received from cell assemble/deassemble unit 33 (43), as shown in FIG 4.

Information for SOH 101, which is generated by SOH generator 12, is set by CPU 37 (47). After terminating SOH 101 of an SDH frame, SOH terminator 11 assigns the first byte (byte immediately after RSOH 101a on the first line) of payload 103 the SDH frame as a particular position, generates pointer pulse in synchronism with the timing of the output of the particular position 103a, and the generated pointer pulse is supplied later-described AAL1-CLAD section 34 (44).

Cell assemble/deassemble unit 33 (43) converts the remaining regions (AU pointer 102 and payload 103; the dod-meshed part of FIG. 2) of the SDH frame, of which SOH 101 has been terminated, from PHY unit 32 (42) into ATM cells (hereinafter called AAL1 cells) of AAL1. Cell assemble/deassemble unit 33 (43) also restores data of AU pointer 102 and payload 103, which data is to be provided for terminal equipments 5A, 5B (6A, 6B) on the receiver side, from AAL1 cells received from ATM network 2 (interface 36 (46)), which cells have been generated by CE transmitter 4 (3) based on an SDH frame from terminal equipment 6 (5) on the sender side that face to the receiver side.

Cell assemble/deassemble unit 33 (43) comprises, as shown in FIG. 3, two sets of AAL1-CLAD section 34 (44) and multiplexer/demultiplexer (MUX/DMX in drawings) 35 (45), each set dedicated to each of two ports. Each AAL1-CLAD section 34 (34) converts data of an SDH frame SOH 101 of which has been terminated and which has been received from corresponding PHY unit 32 (42) into AAL1 cells. Multiplexer/demultiplexer 35 (45) receives and deassembles input AAL1 cells destined for each terminal equipment 5A (5B) (terminal equipment 6A (6B)) thereby obtaining SAR-PDU payload 114 (see FIG. 16).

Multiplexer/demultiplexer 35 (45) multiplexes (time-division multiplexes) AAL1 cells that have assembled in AAL1-CLAD section 34 (44),and demultiplexes AAL1 cells destined for each of terminal equipments 5A and 5B (6A and 6B) to distribute the demultiplexed AAL1 cells to each corresponding AAL1-CLAD section 34 (44).

The distribution of the demultiplexed AAL1 cells are performed based on a comparison of a value of VPI/VCI (Virtual Path Identifier/Virtual Channel Identifier) set by CPU 37 (47) with VPI/VCI set in the received AAL1 cells. For this purpose, AAL1-CLAD section 34 (44) sets VPI/VCI peculiar to an individual SDH frame received from terminal equipments 5A and 5B (6A and 6B) when converting the remaining region of the individual SDH frame to AAL1 cells.

Interface 36 (46) interfaces CE transmitter 3 (4) and ATM network 2. For example, when CE transmitter 3 (4) is connected to an ATM exchange (not shown in drawing) that is comprised of ATM network 2, interface 36 (46) functions as a switch interface for the ATM exchange; when CE transmitter 3 (4) is connected is to a regenerator, interface 36 (46) functions as an interface for the regenerator.

CPU 37 (47) controls overall operations carried out by elements of CE transmitter 3 (4). For example, CPU 37 (47) monitors the result of termination of SOH 101 in PHY unit 32 (42), sets information about SOH 101 that is to be regenerated, and sets VPI/VCI of each AAL1 cell.

OBP 38 (48) supplies each element in CE transmitter 3 (4) with electric power to operate. 155M PLO 39 (49) generates timing pulses of 155MHz that serve as base clock of CE transmitter 3 (4).

AAL1-CLAD section 34 (44) comprises, as shown in FIG. 5, cell assembler 13 and cell deassembler 14 to realize the foregoing functions.

Cell assembler 13 converts data in an SDH frame of which SOH 101 has been terminated (i.e., AU pointer 102 and payload 103) into AAL1 cells as object data for circuit emulation for ATM. In the illustrated embodiment, the conversion into ATM cells is carried out by adding ATM cell header 111 (5 bytes, see FIG. 16) to every 47-byte data (46-byte data when a pointer field 115 is required) in the input SDH frame, which data is to become data of SAR-PDU payload 114.

Namely, the combination of cell assembler 13 and above-mentioned SOH terminator 11 serves to function as a transmission frame converter to convert the remaining region (AU pointer 102 and payload 103) of an input SDH/SONET frame, of which SOH 101 has been terminated, into data in a signal format (AAL1 cells), as object data for circuit emulation by ATM network 2, for ATM network 2 whereupon the AAL1 cells are sent to ATM network 2.

Cell deassembler (an ATM cell receiver) 14 receives AAL1 cells, which has been generated by CE transmitter 4 (3) on the opposite side via ATM network 2 and deassembles the received AAL1 cells thereby extracting SAR-PDU payload 114 (object data for circuit emulation; a part of AU pointer 102 or payload 103, or both AU pointer 102 and payload 103).

Namely, the combination of cell deassembler 14 and above-mentioned SOH generator 12 serves to function as a transmission frame restorer to receive object data (the remaining regions, i.e., AU pointer 102 and payload 103) of the SDH/SONET frame in the form of AAL1 cells from ATM network 2, restore the data in the remaining regions of the SDH/SONET frame and regenerating an output SDH/SONET frame by adding a new SOH 101 to the restored data.

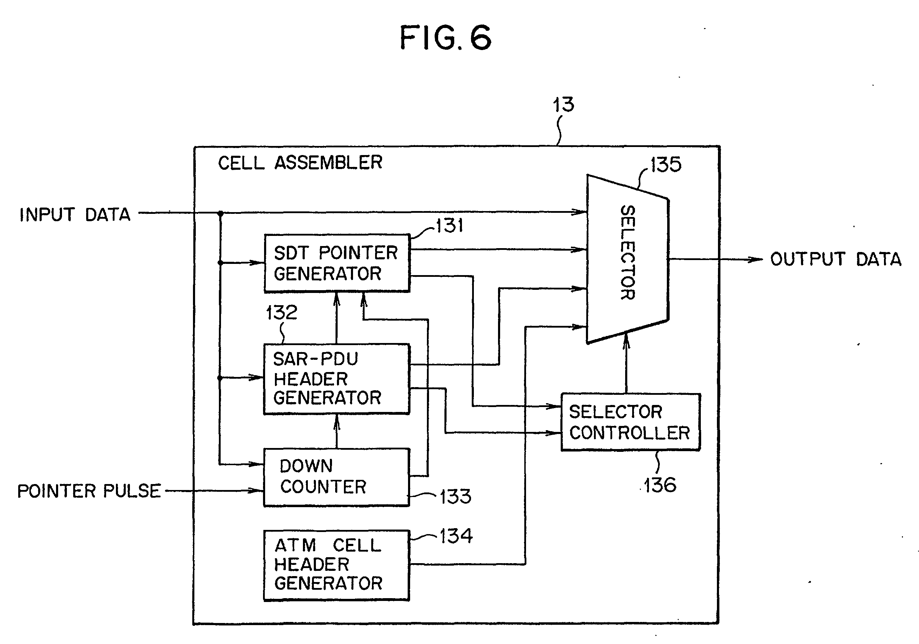

In order to realize the above-mentioned functions, cell assembler 13 comprises, as the main part, an SDT pointer generator 131, an SAR-PDU header generator 132, a down counter 133, an ATM cell header generator 134, a selector 135, and a selector controller 136, as shown in FIG. 6.

SAR-PDU header generator 132 generates SAR-PDU header 113 of 1 byte (FIG. 16). Responding to a pointer pulse from SOH terminator 11, down counter 133 decreases a count from the maximum (MAX.) value to 0 (zero) one by one each time when receiving one byte of input data (AU pointer 102 and payload 103).

The MAX. value of the count represents the number of data bytes for circuit emulation (i.e., data bytes to be converted into AAL1 cells). If an input SDH/SONET frame is an STM-1 frame having 2430 bytes (a matrix of 9 lines of 270 bytes), the MAX. value is 2358 bytes because of terminating of 27-byte RSOH 101a (a matrix of 3 lines of 9 bytes) and 45-byte MSOH 101b (a matrix of 5 lines of 9 bytes).

SDT pointer generator (a particular position information adding section; a boundary indicating pointer adding section) 131 generates an SDT pointer value (particular position information, 7 bits) that is to be set in a pointer field 115 (see FIG. 16) for indicating a boundary of an AAL1 cell (only when SN (sequence number) is even (0, 2, 4, or 6)). In this embodiment, except precise cases (see rules (2) through (5) of generating of an SDT pointer value below), the count value of down counter 133 is set to an SDT pointer value at the time when receiving a pointer pulse, which indicates an input of the particular position (a leading position, which represents the first byte, of a payload 103) 103a so that the position of bytes of SAR-PDU payload 114, in which the particular position 103a is stored as the result of converting into AAL1 cells, is displayed by the boundary 116 (FIG. 17) of structured data.

The rules of generating of an SDT pointer value follows the rules (1) through (5) known to the art as described below:
(1) A single AAL1 cell having an SDT pointer value (hereinafter such an AAL1 cell is called a P format cell) is always generated (exists) during a single cycle of SN=0 through SN=7;
(2) A P format cell has an even SN (i.e., SN=0, 2, 4, or 6). At that time, an SDT pointer value is any one of "0" through "93", and "127";
(3) When boundary 116 (particular position 103a in this example) of structured data is not included in AAL1 cells in the present cycle and is not on the first byte of payload of AAL1 cell of SN=0 in the successive cycle (i.e., boundary 116 is not included in any of AAL1 cells having sequential SNs 0 through 7), AAL1 cell of SN=6 in the present cycle is assigned to a P format cell and, SDH pointer value "127" (all "1") is set to indicate the assignation;
(4) When boundary 116 is on the first byte on AAL1 cell of SN=0, the AAL1 cell of SN=0 is a P format cell and an SDT pointer value therein is set to "0". At that time, if one of AAL1 cells on a prior cycle immediate before the present cycle has boundary 116, AAL1 cell of SN=6 on the prior cycle is also assigned to a P format cell and an SDT pointer value therein is set to "93"; and
(5) When boundary 116 is located at the first byte of an AAL1 cell having SN=2 (or, 4, 6), AAL1 cell of SN=0 (or 2, 4, respectively) in the identical cycle is assigned as a P format cell and an SDT pointer value therein is set to "93".

ATM cell header generator 134 generates ATM cell header 111 (5 bytes, see FIG. 16) of an AAL1 cell. For example, when an SDH/SONET frame (AU pointer 102 and payload 103) sent from terminal equipment 5A (6A) is converted to AAL1 cells, ATM cell header generator 134 generates VPI/VCI that points to terminal equipment 6A (5A) of the destination of the SDH/SONET frame; on the contrary, when an SDH/SONET frame (AU pointer 102 and payload 103) sent from terminal equipment 5B (6B) is converted to ATM cells, ATM cell header generator 134 generates VPI/VCI that points to terminal equipment 6B (5B) of the destination of the SDH/SONET frame. Here, CPU 37 (47) provides ATM cell header generator 134 with information about VPI/VCI, which information is required to generate ATM cell header 111.

Selector 135 selectively outputs input data that is to be stored as SAR-PDU payload 114 from PHY unit 32 (42) (SOH terminator 11), an SDT pointer value generated by SDT pointer generator 131, SAR-PDU header 113 generated by SAR-PDU header generator 132, and/or ATM cell header 111 generated by ATM cell header generator 134.

Selector controller 136 controls an output selected by selector 135. First of all, selector controller 136 monitors states of generating of an SDT pointer value in SDT pointer generator 131 and generating SAR-PDU header 113 in SAR-PDU header generator 132. Then selector controller 136 controls selector 135 based on the states monitored in such a manner that selector 135 outputs various kinds of data in the order of ATM cell header 111, SAR-PDU header 113, an SDT pointer value (only when an AAL1 cell has a SN of 0, 2, 4, or 6 and boundary 116 (particular position 103a)), an input data (47 bytes, or 46 bytes if the AAL1 cell has a pointer field 115) thereby generating and outputting AAL1 cell (FIG. 16) in selector 135.

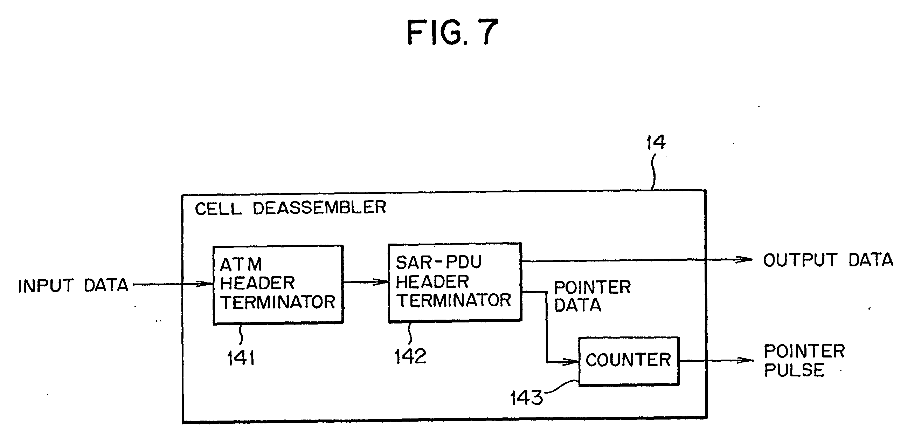

In order to realize the above-mentioned functions, the main part of cell deassembler 14 of FIG. 5 comprises an ATM cell header terminator 141, an SAR-PDU header terminator 142, and a counter 143, as shown in FIG. 7.

ATM cell header terminator 141 terminates ATM cell header 111 of an AAL1 cell (input data), which has been sent from the opposite sender-side CE transmitter 4 (3) facing via ATM network 2(interface 36 (46)) and which has been distributed by multiplexer/demultiplexer 35 (45).

SAR-PDU header terminator 142 terminates SAR-PDU header 113 of ATM cell payload 112, which is the remaining region of the AAL1 cell of which ATM cell header 111 has been terminated by ATM cell header terminator 141. The terminated AAL1 cells, i.e., SAR-PDU payload 114 (47 bytes), which is the result of the termination with respect to the AAL1 cells, are sequentially provided as output data for SOH generator 12 of PHY unit 32 (42). However, if an AAL1 cell of which SAR-PDU header 113 that has been terminated is provided with an even SN (0, 2, 4, 6) and is set an SDT pointer value of 1 byte in pointer field 115, SAR-PDU header terminator 142 outputs the set SDT pointer value (pointer data of 7 bits) as a load value of counter 143 and therefore the remaining 46 bytes of SAR-PDU payload 114 becomes the output data.

SAR-PDU header terminator 142 serves to function as a particular position information extracting section (a boundary indicating pointer extracting section) to extract an SDT pointer value (particular position information), which is set by cell assembler 13 of CE transmitter 4 (3) on the opposite side via ATM network 2 because of its operation of terminating of SAR-PDU header 113 of a received AAL1 cell.

Counter 143 counts down a pointer value, as a load value, from SAR-PDU header terminator 142 every time when receiving one byte of output data. When a down-counted value becomes "0 (zero)", counter 143 generates a pointer pulse indicating that a particular position (the first byte of payload 103) 103a is located the data output at the time of the down-counted value "0" at whereupon provides SOH generator 12 of PHY unit 32 (42) with the generated pointer pulse.

Upon receipt of the generated pointer pulse, SOH generator 12 outputs data of SAR-PDU payload 114 from SAR-PDU header terminator 142 (that is, restores AU pointer 102 and payload 103) and adds a new SOH 101 to the output data in such a manner that particular position 103a indicated by the pointer pulse is located at the first byte of the payload 103 (the same position as the position in the input SDH/SONET frame prior to converting into AAL1 cells) of the output SDH/SONET frame. As a result, it is possible to restore (regenerate) the input SDH/SONE frame that has been converted into AAL1 cells at CE transmitter 4 (3) on the opposite side via ATM network 2.

Namely, SOH generator 12 functions as a transmission frame regenerator to restore AU pointer 102 and payload 103 which have been converted into AAL1 cells at CE transmitter 4 (3) at the opposite side (the sender-side) based on the object data (for circuit emulation) of SAR-PDU payload 114 extracted by cell deassembler 14 and to regenerate an output frame with a new SOH 101 added thereto.

As mentioned above, CE transmitter 3 (4) serves to function as both a sender- and receiver-side transmitter comprising a sender-side system (SOH terminator 11, cell assembler 13) to terminate SOH 101 of an SDH/SONET frame received from terminal equipment 5 (6) therein and to convert data in the SDH/SONET frame except the terminated SOH 101 into ATM cells, and a receiver-side system (cell deassembler 14, SOH generator 12) to restore (regenerate) an SDH/SONET frame received from terminal equipment 6 (5) included in CE transmitter 4 (3) disposed at the opposite side of ATM network 2.

Here, operations carried out in CES 1 (CE transmitter 3 (4)) of the present invention will be now described. It is assumed that CE transmitter 3 is a sender-side (input) transmitter and CE transmitter 4 is a receiver-side (output) transmitter, for convenience. The illustrated example is described with respect to single-direction circuit emulation in which an SDH/SONET frame is sent from terminal equipment 5A to terminal equipment 6A. However, circuit emulation also from terminal equipment 5B to terminal equipment 6B and their reverse directions are of course carried out in the same fashion as the illustrated example.

First of all, upon receipt of an SDH/SONET (OC-3) frame sent from terminal equipment 5A, CE transmitter 3 (hereinafter called sender-side CE transmitter 3) causes E/O-O/E 31 to convert the input SDH/SONET frame into an electrical signal (an STS-3 frame) whereupon the electrical signal is output to SOH terminator 11 in PHY unit 32.

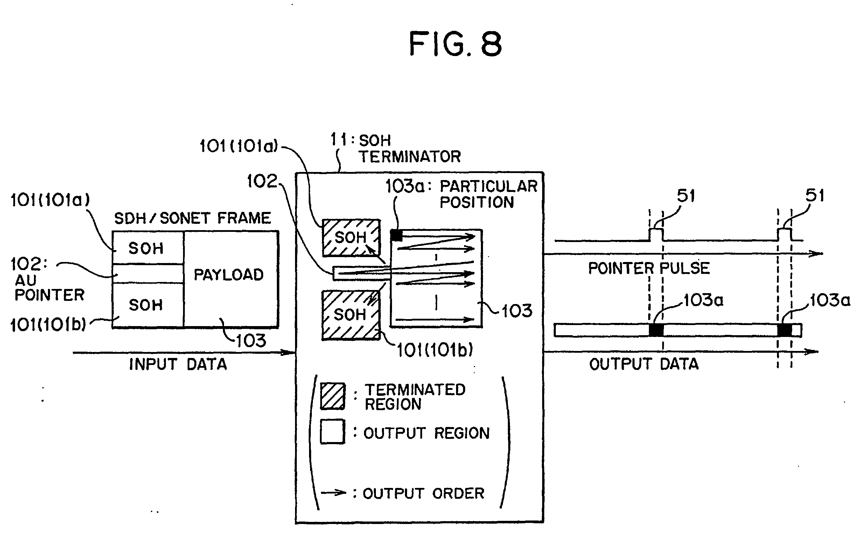

SOH terminator 11 terminates SOH 101 (RSOH 101a and MSOH 101b: the hatched parts in FIG. 8) of the input SDH/SONET frame that has three regions respectively assigned to SOH 101, AU pointer 102 and payload 103 (SOH terminating step). Further, SOH terminator 11 assures framing and synchronization, monitors bit errors, performs control data communication via a data communication channel (DCC) for operation, administration, and maintenance (OAM), and performs OAM by a unit of section, such as exchanging systems carried out when occurring a problem.

The data in the remaining regions (AU pointer 102 and payload 103) after the terminating of SOH 101 is sequentially output to cell assembler 13 in AAL1-CLAD section 34 starting with the first byte (particular position) 103a of payload 103, as schematically shown in FIG. 8. At that time, a pointer pulse 51 to indicate the first byte (particular position 103a of payload 103) is also output to cell assembler 13 at the timing of outputting of particular position 103a.

Upon receipt of the terminated SDH/SONET frame (AU pointer 102 and payload 103) of input data from SOH terminator 11, cell assembler 13 generates and outputs AAL1 cells (an AAL1 cell generating step; a transmission frame converting set) by selector controller 136 switching outputs of selector 135 as previously described with reference to FIG. 6.

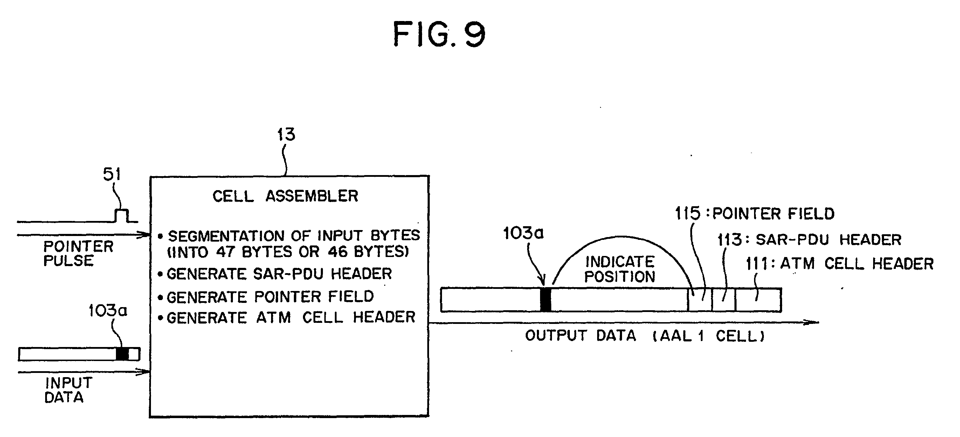

In other words, when the input data from SOH terminator 11 includes particular position 103a (when cell assembler 13 receives a pointer pulse 51), cell assembler 13, as shown in FIG. 9, generates AAL1 cells by outputting data in the following order: ATM cell header 111 generated in ATM cell header generator 134; SAR-PDU header 113 generated in SAR-PDU header generator 132; an SDT pointer value generated in SDT pointer generator 131; and the input data (SAR-PDU payload data of 46 bytes).

On the other hand, when the input data from SOH terminator 11 does not include particular position 103a (when cell assembler 13 does not receive a pointer pulse 51), cell assembler 13 generates AAL1 cells by outputting data in the following order: ATM cell header 111 generated in ATM cell header generator 134; SAR-PDU header 113 generated in SAR-PDU header generator 132; and the input data (SAR-PDU payload data of 47 bytes).

In either case, cell assembler 13 sequentially converts input data received from SOH terminator 11 into AAL1 cells irrespective of a difference between AU pointer 102 and payload 103 (a difference in type of data) and the number of VC frames (path signals) 104 multiplexed in payload 103 (namely, performing an AU pointer process with respect to AU pointer 102 without regarding positions of path signals 104 multiplexed in payload 103 (the number of multiplexed path signals 104)).

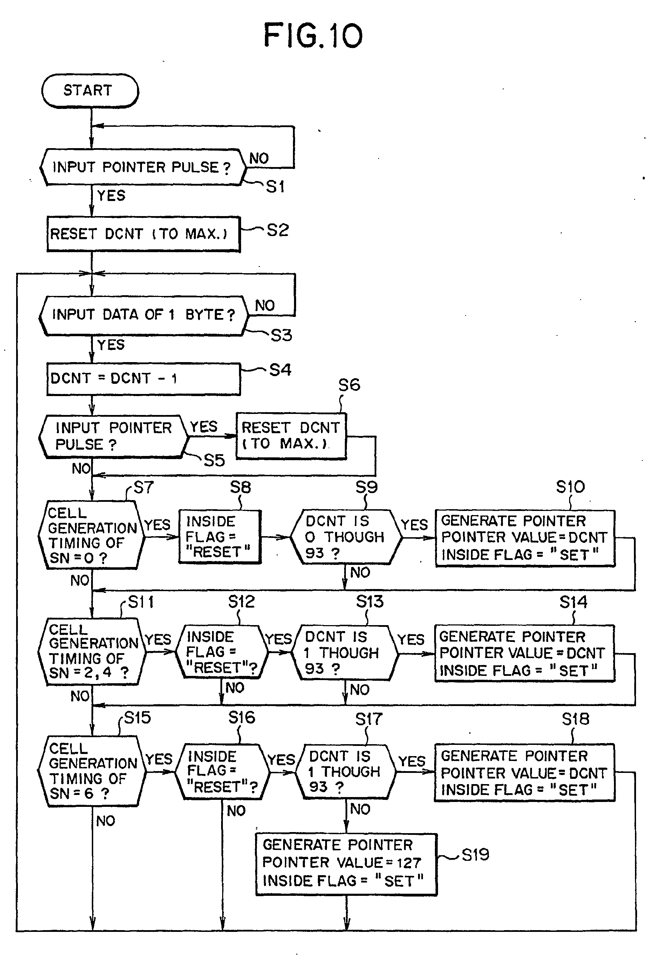

Procedural steps (Steps S1 through S19) of generating of an SDT pointer value by SDT pointer generator 131 will now be described in detail with reference to flow diagram FIG. 10.

First of all, after being started, SDT pointer generator 131 monitors an input of the first pointer pulse 51 from SOH terminator 11 (No route in Step S1). When a pointer pulse 51 is input (Yes judgment in Step S1), SDT pointer generator 131 controls down counter 133 in such a manner that a count value (hereinafter called "DCNT") of down counter 133 is reset (to the MAX.) (Step S2).

At that time, down counter 133 monitors whether or not one-byte data is input from SOH terminator 11 (No route in Step S3). When receiving input data from SOH terminator 11 (Yes route in Step S3), down counter 133 decrements the DNCT by one (DNCT=DNCT-1, where "-" should be read as "minus") (Step S4).

Meanwhile, SDT pointer generator 131 keeps monitoring whether or not one-byte data is input from SOH terminator 11 (Step S5). If other pointer pulse 51 is not input, SDT pointer generator 131 confirms whether or not the present timing is a timing for (starting) generating AAL1 cells of SN=0 (No route in Step S5 to Step S7).

On the contrary, when other pointer pulse 51 is input (YES route in Step S5), SDT pointer generator 131 resets DNCT of down counter 133 again (Step S6) and confirms whether or not the present timing is a timing for (starting) generating AAL1 cells of SN=0 (Step S7).

When the present timing is a timing for generating AAL1 cells of SN=0, SDT pointer generator 131 turns an inside flag, which indicates whether or not an SDT pointer is generated in the present cycle (i.e., the inside flag indicates "set" when generating an SDT pointer value, and "reset" when moving to the successive cycle), to "reset" (Yes route in Step S7 to Step S8). After that, SDT pointer generator 131 confirms whether the DNCT of down counter 133 is any one of 0 through 93 (Step S9).

If the DCNT is one of 0 through 93, a boundary 116 (particular position 103a) exists in SAR-PDU payload 114 of either one of AAL1 cells having SNs=0 and 1, which cells are to be generated. Therefore, the AAL1 cell of SN=0 becomes a P format cell whereupon SDT pointer generator 131 sets a current DNCT (one of 0 through 93) of down counter 133 to a SDT pointer value of the AAL1 cell of SN=0 and turns the inside flag to "set" (Yes route in Step S9 to Step S10).

SDT pointer values for the AAL1 cell of SN=0 contain "0" because particular position 103a locates at the first byte of SAR-PDU payload 114 indicated by an SDT pointer value of "0" when following the above-mentioned rules of generating of an SDT pointer value.

If the DCNT of down counter 133 is a number other than 0 through 93 (No route in Step S9), or when the present timing is not timing for generating AAL1 cells of SN=0 (No route in Step S7), SDT pointer generator 13 does not generate an SDT pointer value for the AAL1 cell of SN=0.

In succession, SDT pointer generator 131 repeatedly performs procedural steps after Step S3 to decrease DNCT of down counter 133 (No route in Step S11 or S15) until the present timing becomes a timing for generating either one of AAL1 cells of SN=2, 4, and 6 (until Yes judgment in either one of Steps S11 and S15).

When the present timing becomes a timing for generating an AAL1 cell at SN=2, 4, or 6, (Yes route in Step S11 or S15), SDT pointer generator 131 confirms whether or not the inside flag is set to "reset" (i.e., whether or not an SDT pointer value is not generated yet in the present cycle) (Yes route in Step S11 or S15 to Step S12 or S16, respectively).

If an SDT pointer value for an AAL1 cell having SN=0 has been generated at above Step S10, SDT pointer generator 131 generates no SDT pointer value for an AAL1 cell of SN=2, 4, or 6 because the inside flag indicates "set" (No route in Step S12 and S16).

On the other hand, if an SDT pointer value for an AAL1 cell having SN=0 is not generated hitherto (namely, the inside flag indicates "reset"; Step S12 or S16), SDTpointer generator 131 confirms whether or not the current DCNT of down counter 133 is any one of 1 through 93 (Yes route in Step S12 or S16 to Step S13 or S17, respectively).

As a result of the confirmation, if the current DCNT is in 1 through 93, boundary 116 (particular position 103a) is included in either one of three sets of two successive AAL1 cells having SNs 2 and 3, 4 and 5, or 6 and 7, which are to be generated at a later time. SDT pointer generator 131 therefore sets an SDT pointer value for an AAL1 cell of SN=2, 4, or 6 to the current DNCT (one of 1 through 93), and turns the inside flag to "set" (Yes routes Steps S13 or S17 to Step S14, or S18).

When the DCNT of down counter 133 is in a number other than 1 through 93 at a timing for generating an AAL1 cell having SN=2 (or 4) (No route in Step S13), an STD pointer value is not generated since the AAL1 cell of SN=2 (or 4) does not become a P format cell. Otherwise, when the inside flag indicates "reset" and the DCNT of down counter 133 is in a number other than 1 through 93 at a timing of an AAL1 cell having SN=6 (Yes route in Step S16, No route in Step S17), particular position 103a is not included in SAR-PDU payloads 114 of any one of AAL1 cells of SNs= 0 through 7, which cells are to be generated in the present cycle, and an STD pointer value is set to a fixed value (127: all "1") that notifies the absence of particular position 103a in any one of AAL1 cells in an identical cycles (Step S19).

In the above-mentioned manner, SDT pointer generator 131 added an SDT pointer value (a pointer field 115) to one of AAL1 cells (having SNs of 0, 2, 4, and 6) which cells are capable of including an SDT pointer value therein in order to indicate the position of particular position 103a included in an AAL1 cell or indicate that particular position 103a is not included in any one of AAL1 cells in an identical cycle.

Each AAL1 cells that have been generated in the foregoing processes are sequentially output to multiplexer/demultiplexer 35 where the each AAL1 cells are combined with AAL1 cells (data of AU pointer 102 and payload 103 from terminal equipment 5B, which data has been converted into AAL1 cells) which has been generated in cell assembler 13 of the other AAL1-CLAD section 34 by a digital process of time-division multiplexing (TDM). After that, the multiplexed data is output to ATM network 2 through interface 36.

Upon receipt of AAL1 cells from ATM network 2, CE transmitter 4 (hereinafter called receiver-side CE transmitter 4) on the receiver-side outputs the AAL1 cells to multiplexer/demultiplexer 45 in cell assemble/deassemble unit 43 through interface 46. Multiplexer/demultiplexer 45 refers to VPI/VCI set in ATM cell header 113 in each received AAL1 cell and distributes the each received AAL1 cell to either one of cell deassembler 14 respectively included in cell assemble/deassemble unit 43 serving for the two ports with reference to the VPI/VCI.

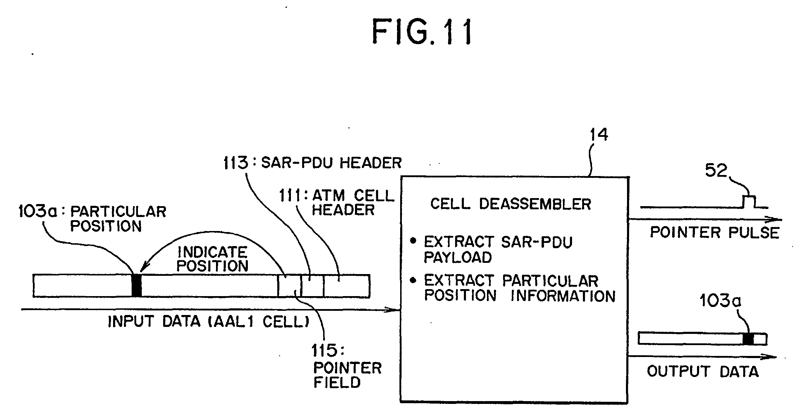

Upon receipt of the each AAL1 cell as input data from multiplexer/demultiplexer 45, ATM cell header terminator 141 in cell deassembler 14 terminates ATM cell header 111 of a receipt AAL1 cell and then SAR-PDU header terminator 142 also terminates SAR-PDU header 113 (extracting SAR-PDU payload 114; an ATM cell receiving step), as shown in FIG 11.

If the received AAL1 cell has an even SN (0, 2, 4, or 6) and a pointer field added thereto, SAR-PDU header terminator 142 outputs an SDT pointer value, as a load value of counter 143, set in the pointer field 115 (i.e., extracting particular position information) and also outputs the 46-byte remaining data of SAR-PDU payload 114, as output data, to SOH generator 12 of PHY unit 42.

At that time, counter 143 counts down in accordance with the number of bytes of data output. Because data output when DNCT becomes "0 (zero)" is at particular position 103a, counter 143 outputs pointer pulse 52 indicating the particular position 103a to SOH generator 12 together with the output data.

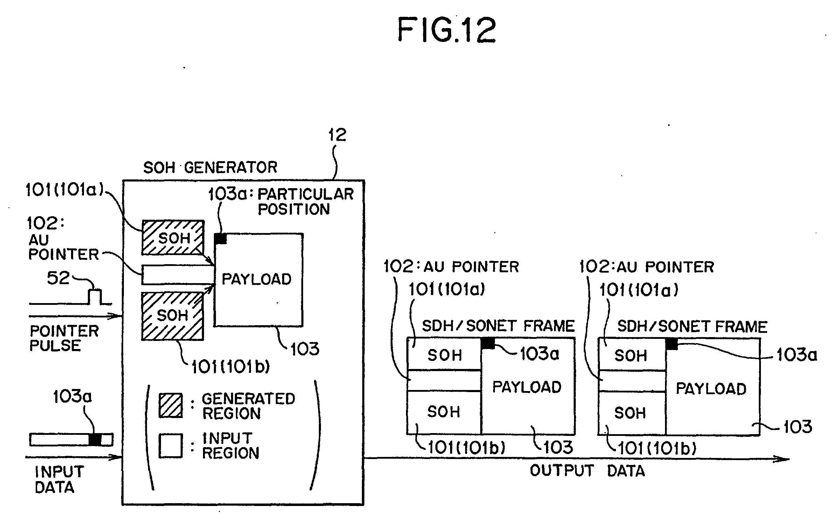

SOH generator 12 inserts (adds) new SOH 101 (RSOH 101a and MSOH 101b; the hatched part of FIG. 12) to lows of output data in such a manner that input data byte (i.e., particular position 103a) that has been received from cell deassembler 14 together with the pointer pulse 52 locates at the first byte of payload 103 of the output SDH/SONET frame.

As a result, SOH generator 12 restores the data respectively in AU pointer 102 and payload 103, which data has been converted into AAL1 cells in sender-side CE transmitter 3 and regenerates output SDH/SONET frame with new SOH 101 for the output-side section, which SOH 101 is added to the output frame (transmission frame generating (restoring) step). The regenerated output SDH/SONET frame is converted to an optical signal (OC-3) by E/O-O/E 41 to be output to terminal equipment 6A.

In the illustrated example, an SDH/SONET frame is assumed to be an STM-1 frame having three signal paths that are multiplexed. As alternatives, an SDH/SONET frame may be an STM-1 frame having one signal path that is byte-multiplexed or may be an STM-Nhaving a greater bit rate. Circuit emulation identical with the illustrated example can also carried out with respect to SDH/SONET frames described as the alternatives.

As described above, an SOH 101 of an SDH/SONET frame is terminated at sender-side CE transmitter 3 and a new SOH 101 is added at receiver-side CE transmitter 4, and the remaining region (i.e., AU pointer 102 and payload 103) is converted into AAL1 cells at sender-side CE transmitter 3 irrespective of a difference between AU pointer 102 and payload 103 (a difference in data type) and of the number of VC frames (path signals) 104 multiplexed in payload 103. After the conversion, the AAL1 cells destined for receiver-side CE transmitter 4 are output to ATM network 2 whereupon receiver-side CE transmitter 4 regenerates the SDH/SONET frame by carrying out the opposite process of that performed at sender-side CE transmitter 3. As a result, the present invention guarantees the following advantageous.
(1) It is possible to independently perform management and operation with respect to sections on the both sides of ATM network 2.
(2) It is possible to realize processes (e.g., converting data to ATM cells, restoring data of an SDH/SONET frame based on ATM cell) irrespective of kind (region, such as AU pointer 102 and payload 103) of information for circuit emulation, and of the number of signal paths multiplexed in payload 103. This eliminates the requirement to have function to convert data into ATM cells and restore data based on ATM cells in accordance with respective different kinds of data for circuit emulation and the number of signal paths multiplexed. As a result, CES 1 (CE transmitters 3 and 4) is allowed to be simple in configuration required thereby reducing the size, a cost, and energy consumption.

Receiver-side CE transmitter 4 identifies particular position 103a that locates at the first byte of an input SDH/SONET frame (AU pointer 102 and payload 103) of sender-side CE transmitter 3 with ease based on an SDT pointer value, which indicates the particular position 103a, set in pointer field 115 by sender-side CE transmitter 3. Therefore, it is possible to surely restore AU pointer 102 and payload 103 same as the input frame.

Especially in the illustrated example, since particular position 103a is indicated by pointer field 115 for indicating a boundary of structured data defined in an AAL1 cell, it is possible to restore an output SDH/SONET frame, using a defined format of an AAL1 cell, and to realize the restoring of output data in CE transmitters 3 and 4 with ease.

Particular position 103a set at the first byte of payload 103 restores object data of AU pointer 102 and payload 103 simply by sequentially outputting data received after receiving particular position 103a at receiver-side CE transmitter 4. This realizes a high-speed process to restore AU pointer 102 and payload 103 with ease.

### (B) Others:

Circuit emulation of the illustrated example can be applied to a various communication network (except an SDH network) in addition to ATM network 2. When circuit emulation is performed in such other communication network, sender-side CE transmitter 3 converts data of AU pointer 102 and payload 103 of an SDH/SONET frame to signal data of a format supported by the other communication network and transmits the converted signal data and then receiver-side transmitter 4 restores the data of AU pointer 102 and payload 103 based on the converted signal data.

For example, if CES 1 includes, as a substitution for ATM network 2, the Internet, which handles IP (Internet Protocol) packets, between terminal equipments 5 and 6 CE transmitters 3 and 4 respectively have a function to assemble and deassemble IP packets as a substitution for a function of assemble and deassemble AAL1 cells so that the circuit emulation similar to the illustrated example can be realized.

Specifically, sender-side CE transmitter 3 (4) converts data of AU pointer 102 and payload 103 contained in an input SDH/SONET frame into IP packets and sends the IP packets to the Internet. Upon receipt of the IP packets from the Internet, receiver-side CE transmitter 4 (3) deassembles the received IP packets to extract and restore AU pointer 102 and payload 103 and regenerates an output SDH/SONET frame with new SOH 101 added thereto.

Further, each CE transmitters 3 and 4 incorporates two terminal equipments 5 and 6 in the illustrated example, however CE transmitter 3 (4) may incorporate one terminal equipment 5 (6) (that is, CE transmitter 3 (4) of FIG. 3 comprises one E/O-O/E 31 (41), one PHY unit 32 (42), and are AAL1-CLAD section 34 (44), and do not require multiplexer/demultiplexer 35 (45)), or may incorporate more than two terminal equipments.

CE transmitter 3 and 4 serves to function as a sender-and receiver-side transmitters in the illustrated embodiment. As an alternative, one of CE transmitters 3 and 4 may serve as a sender-side transmitter comprising SOH terminator 11 and cell assembler 13 and the other may serve as a receiver-side transmitter comprising cell deassembler 14 and SOH generator 12.

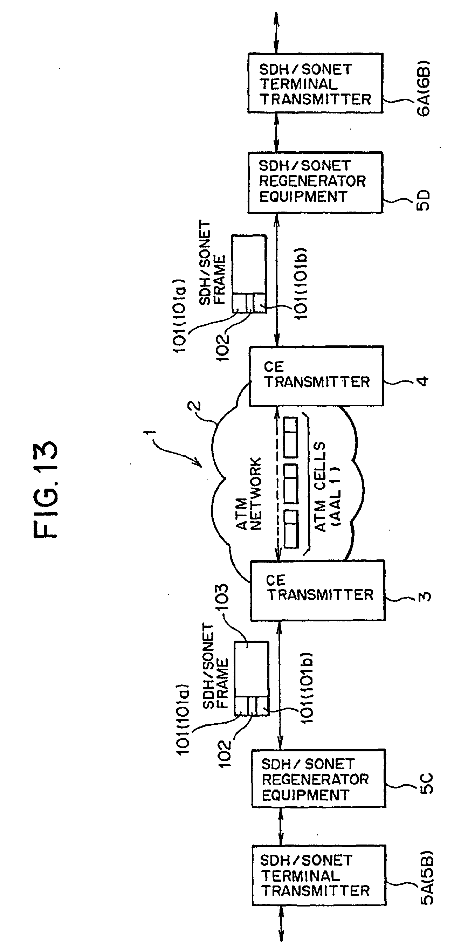

In the present embodiment, RSOH 101a and MSOH 101b that compose SOH 101 are terminated and then added to an output SDH/SONET frame. Alternatively, as shown in FIG. 13, if CES 1 has SDH/SONET regenerators 5C and 5D are disposed on the both a sender side and a receiver side, SDH/SONET regenerators 5C and 5D terminates only RSOH 101a of SOH 101, and adds only RSOH 101a to an regenerated SDH/SONET frame. Therefore since it is possible to independently carry out operation, administration, and maintenance for regenerated sections that are on the both side of ATM network 2, CE transmitters 3 and 4 may terminated only RSOH 101a and adds only RSOH 101a to an output SDH/SONET frame so that object data for circuit emulation (data in the remaining region) includes MSOH 101b.

Particular position 103a should by no means be limited to the first byte of payload 103, and, as an alternative, may be at any position in AU pointer 102 and payload 103. Further, particular position 103a should by no means be indicated by pointer field 115 in an AAL1 cell, however may be indicated by a void field other than the pointer field 115, or by another dedicated field newly defined. Namely, even when an SDH/SONET data is converted to cells other than AAL1 cells, it is possible to indicate particular position 103a by defining a field serving to indicate particular position 103.

Particular position 103a should by no means be limited to being indicated by a pointer. Alternatively, particular position 103a may be directly indicated by providing data byte at particular position 103a with information to indicate particular position 103a. However, particular position 103a at the first byte of payload 103 which position is indicated by a pointer at pointer field 115 result in uncomplicated succeeding process of adding SOH 101 to an output SDH/SONET frame because it is possible to detect the timing of receipt of particular position 103a prior to actually receiving particular position 103a.

Further, the present invention should by no means be limited to the foregoing embodiment, and various changes or modifications may be suggested without departing from the gist of the present invention.

### INDUSTRIAL APPLICABILITY

As mentioned above, the present invention realizes operation, administration, and maintenance of circuit emulation independently in each of communication sections at a sender side and a receiver side for circuit emulation. Moreover, since it is possible to perform circuit emulation irrespective of the number of signal paths multiplexed in an SDH/SONET frame, circuit emulation of the present invention can integrate data communicated respectively in various media within a low cost by the technique of circuit emulation therefore highly contributing to the art of high-speed data communication.

## Claims

1. A circuit emulation system comprising:
a sender-side transmitter, disposed at the input side of an ATM network, for receiving a synchronous-network-standards frame in conformity with synchronous network standards, such as SDH, which frame has three regions respectively assigned to a section overhead, an administrative unit pointer, and a payload; and
a receiver-side transmitter, disposed at the output side of the ATM network, for outputting the synchronous-network-standards frame;
said sender-side transmitter including
a section-overhead terminator for terminating said section overhead of the received synchronous-network-standards frame, and
means for converting data in all of the three regions of the received synchronous-network-standards frame except said section overhead, which regions include said administrative unit pointer, into ATM cells as object data for circuit emulation by ATM and sending said ATM cells out to the ATM network; and
said receiver-side transmitter including
an ATM-cell receiver for receiving said ATM cells from the ATM network and extracting said object data for circuit emulation from the received ATM cells, and
a synchronous-network-standards-frame regenerator for restoring the data in the remaining regions of the received synchronous-network-standards frame from said object data for circuit emulation, which object data has been extracted by said ATM-cell receiver, and regenerating an output synchronous-network-standards frame with a new section overhead added thereto.

2. A circuit emulation system according to claim 1, wherein:
said data converting means of said sender-side transmitter includes a particular-position-information adding section for adding, to said ATM cells, particular-position information indicating particular data in said object data for circuit emulation, which particular data is located at a particular position of the received synchronous-network-standards frame;
at said receiver-side transmitter
said ATM-cell receiver includes a particular-position-information extracting section for extracting said particular-position information from the received ATM cells, and
said synchronous-network-standards-frame regenerator performs restoration of said particular data in said remaining regions and addition of said new section overhead in such a manner that said particular data, which is indicated by said particular-position information extracted by said particular-position-information extracting section, is located at the same position as said particular position in the received synchronous-network-standards frame.

3. A circuit emulation system according to claim 2, wherein:
said particular-position-information adding section of said data converting means serves as a boundary-indication-pointer adding section for adding said particular-position information to a boundary-indication-pointer field of structured data, which is defined as ATM cells of ATM adaptation layer type 1 ; and
said particular-position-information extracting section of said ATM-cell receiver serves as a boundary-indication-pointer extracting section for extracting said particular-position information from said boundary-indication-pointer field.

4. A circuit emulation system according to claim 2 or 3, wherein said particular position represents a leading position of said payload of the received synchronous-network-standards frame.

5. A circuit emulation method comprising the steps of:
terminating a section overhead of a synchronous-network-standards frame in conformity with synchronous network standards, such as SDH, which frame has three regions respectively assigned to said section overhead, an administrative unit pointer, and a payload;
converting data in all of the three regions of the synchronous-network-standards frame except said section overhead, which regions include said administrative unit pointer, into ATM cells as object data for circuit emulation by ATM, and sending said ATM cells out to an ATM network;
receiving said ATM cells from the ATM network and extracting said object data for circuit emulation from the received ATM cells; and
restoring the data in the remaining regions of the synchronous-network-standards frame from said object data for circuit emulation, which object data has been extracted in said ATM-cell receiving step, and regenerating an output synchronous-network-standards frame with a new section overhead added thereto.

6. A sender-side transmitter for a circuit emulation system in which said sender-side transmitter is disposed at the input side of an ATM network for receiving a synchronous-network-standards frame in conformity with synchronous network standards, such as SDH, which frame has three regions respectively assigned to a section overhead, an administrative unit pointer, and a payload, said sender-side transmitter comprising:
a section-overhead terminator for terminating said section overhead of the received synchronous-network-standards frame; and
means for converting data in all of the three regions of synchronous-network-standards frame except said section overhead, which regions include said administrative unit pointer, into ATM cells as object data for circuit emulation by ATM and sending said ATM cells out to the ATM network.

7. A sender-side transmitter according to claim 6, wherein said data converting means includes a particular-position-information adding section for adding, to said ATM cells, particular-position information indicating particular data in said object data for circuit emulation, which particular data is located at a particular position of the received synchronous-network-standards frame.

8. A sender-side transmitter according to claim 7, wherein said particular-position-information adding section serves as a boundary-indication-pointer adding section for adding said particular-position information to a boundary-indication-pointer field of structured data, which is defined as ATM cells of ATM adaptation layer type 1.

9. A sender-side transmitter according to claim 7 or 8, wherein said particular position represents a leading position of said payload of the received synchronous-network-standards frame.

10. A receiver-side transmitter for a circuit emulation system in which said receiver-side transmitter is adapted to be disposed at the output side of an ATM network for outputting a synchronous-network-standards frame in conformity with synchronous network standards, such as SDH, which frame has three regions respectively assigned to a section overhead, an administrative unit pointer, and a payload, the system including at a sender-side transmitter having means for converting data in all of the three regions of the synchronous-network-standards frame except the section overhead, which regions include said administrative unit pointer, into ATM cells as object data for circuit emulation by ATM and sending the ATM cells out to the ATM network, said receiver-side transmitter comprising:
an ATM-cell receiver for receiving said ATM cells from the ATM network and extracting said object data for circuit emulation from the received ATM cells; and
an synchronous-network-standards-frame regenerator for restoring the data in the remaining regions of the synchronous-network-standards frame from said object data for circuit emulation, which object data has been extracted by said ATM-cell receiver, and regenerating the received synchronous-network-standards frame with a new section overhead added thereto.

11. A receiver-side transmitter for a circuit emulation system according to claim 10, wherein:
if particular-position information indicating particular data of said object data for circuit emulation, which particular data is located at a particular position in the synchronous-standards frame, is added to said ATM cells at the sender-side transmitter;
said ATM-cell receiver includes a particular-position-information extracting section for extracting said particular-position information from the received ATM cells; and
said synchronous-network-standards-frame regenerator performs restoration of said particular data in the remaining regions of the synchronous-network-standards frame and addition of said new section overhead in such a manner that said particular data, which is indicated by said particular-position information extracted by said particular-position-information extracting section, is located at the same position as said particular position in the synchronous-network-standards frame.

12. A receiver-side transmitter for a circuit emulation system according to claim 11, wherein, if said particular-position information is added to a boundary-indication-pointer field of structured data, which is defined as ATM cells of ATM adaptation layer type 1, said particular-position-information extracting section serves as a boundary-indication-pointer extracting section for extracting said particular-position information from said boundary-indication-pointer field.

13. A receiver-side transmitter for a circuit emulation system according claim 11 or 12, wherein said particular position represents a leading position of said payload of the received synchronous-network-standards frame.

14. A circuit emulation system comprising:
a sender-side transmitter, disposed at the input side of a non-SDH-transmission communication network, for receiving a synchronous-network-standards frame in conformity with synchronous network standards, such as SDH, which frame has three regions respectively assigned to a section overhead, an administrative unit pointer, and a payload; and
a receiver-side transmitter, disposed at the output side of the non-SDH-transmission communication network, for outputting the synchronous-network-standards frame;
said sender-side transmitter including a frame converter for converting data in all of the three regions of the synchronous-network-standards frame except said section overhead, which regions include said administrative unit pointer, into a signal format for the non-SDH-transmission communication network as object data for circuit emulation by the non-SDH-transmission communication network, and sending the resulting signal-format data out to the non-SDH-transmission communication network;
said receiver-side transmitter including a synchronous-network-standards-frame regenerator for receiving said object data for circuit emulation, which object data has been received from the non-SDH-transmission communication network in said signal format, and regenerating an output synchronous-network-standards frame with a new section overhead added thereto.

15. A circuit emulation method comprising:
converting data in all of three regions of a synchronous-network-standards frame in conformity with synchronous network standards, such as SDH, which frame has three regions respectively assigned to a section overhead, an administrative unit pointer, and a payload, except said section overhead, which regions include said administrative unit pointer, into data in a signal format for a non-SDH-transmission communication network as object data for circuit emulation by the non-SDH-transmission communication network, and sending the signal-format data out to the non-SDH-transmission communication network; and
receiving said object data for circuit emulation from the non-SDH/SONET-transmission communication network, restoring the data in the remaining regions of the synchronous-network-standards frame from the received object data for circuit emulation, and regenerating an output synchronous-network-standards frame with a new section overhead added thereto.
